# EUROPEAN PATENT APPLICATION

(11) **EP 1 710 296 A1**
(43) Date of publication of application: **11.10.2006**
(21) Application number: 04819880.8
(22) Date of filing: 02.12.2004
(51) Int. Cl.: C11C 3/00, A23D 9/00, A23L 1/30, A23J 7/00

(54) **FAT COMPOSITION CONTAINING PHOSPHOLIPID AND LONG-CHAIN POLYUNSATURATED FATTY ACID-SUPPLYING COMPOUND AND FOOD USING THE SAME**

(30) Priority: 02.12.2003 JP 2003403630
(71) Applicant: SUNTORY LIMITED, Osaka-shi, Osaka 530-8203 (JP)
(72) Inventor: KAWASHIMA, Hiroshi, Osaka 569-1121 (JP); ONO, Yoshiko, Osaka 533-0022 (JP); NAKAHARA, Koichi, Osaka 561-0861 (JP)
(74) Representative: Vossius & Partner
(86) International application number: PCT/JP2004/017915
(87) International publication number: WO 2005/054415

(57) **Abstract**

An oil or fat composition according to the present invention contains a LCPUFA supply compound as a first component, and phospholipids as a second component, the LCPUFA supply compound containing LCPUFA in its structure and being hydrolyzable to remove its LCPUFA, wherein respective proportions of the first component and the second component are determined according to the number of hydrolyzable fatty acid bonds contained in the phospholipid molecules. The phospholipids and LCPUFA supply compound are metabolized to LCPUFA-PL in the body and absorbed. As a result, an oil or fat composition is provided that can efficiently increase the LCPUFA-PL level in the body. This is realized without directly using the phospholipids (LCPUFA-PL) whose constituents are long-chain polyunsaturated fatty acids (LCPUFA), taking into account the metabolism in the body.

## Description

### TECHNICAL FIELD

The present invention relates to oil or fat compositions containing phospholipids and a long-chain polyunsaturated fatty acid supply compound, and to foods using such oil or fat compositions.

### BACKGROUND ART

Conventionally, phospholipids (may be referred to as "PL" hereinafter) have been used in a wide variety of fields. For example, in one technique of preparing compositions or processed foods containing phospholipids, oil or fat compositions have been known which include: a phospholipid composition containing phospholipids, carotenoid, and tocophenol; and an oil or fat composition containing such a phospholipid composition (see Patent Publication 1). The technique disclosed in this publication aims to improve the antioxidant action of the phospholipids when they are used as an antioxidant.

There have also been known compositions in which egg yolk lipids containing phospholipids are mixed with a LCPUFA (long-chain polyunsaturated fatty acid)-containing fat or oil (see Patent Publication 2). The purpose of this technique is to prevent loss of flavor in a LCPUFA-containing fat or oil as represented by fish oil. Further, there have been known arachidonic acid (AA)-containing PL, DHA-containing PL, AA-containing triglycerides, and processed foods containing DHA-containing triglycerides (see Patent Publication 3). The purpose of this technique is to produce processed foods with compositions similar to the breast milk.

Further, PL is known to possess various physiological functions, including brain function improving effect, anti-stress effect, and cholesterol reducing action. PL occur in various forms, well-known examples of which include phosphatidylcholine (PC), phosphatidylserine (PS), phosphatidylethanolamine (PE), and phosphatidylinositol (PI). These different forms of PL have different functions and properties.

Among these different types of PL, phospholipids whose constituents are long-chain polyunsaturated fatty acids (may be referred to as "LCPUFA" hereinafter) with 20 or greater carbon atoms (may be referred to as "LCPUFA-PL" for convenience of explanation) are known to exhibit superior brain function improving effect, as compared with phospholipids whose constituents are not LCPUFA (may be referred to as "non-LCPUFA-PL" for convenience of explanation) (see Non-Patent Publication 1, for example). Specific examples of LCPUFA include, for example, docosahexaenoic acid (DHA) and arachidonic acid (AA).

Non-phospholipid LCPUFA derivatives are also known to possess brain function improving effects (see Patent Publication 4, for example). However, unlike phospholipids such as the LCPUFA-PL or Non-LCPUFA-PL, the non-phospholipid LCPUFA derivatives are believed to act on the hippocampus of the cerebrum to improve the brain functions.

The LCPUFA-PL is considered to provide superior brain function improving effect because (1) it has the structure actually present in the brain, (2) it can pass through the blood brain barrier, and (3) it can reach the brain tissue or other tissues in the body without being captured or modified in the liver, since the molecule is absorbed without entering the liver.

The following more specifically describes these reasons. (1) The LCPUFA in the brain is known to exist almost entirely in the form of phospholipids. More specifically, LCPUFA exist as compounds such as PC, PS, PE, and PI, and therefore exhibit a variety of functions in the brain. (2) The phospholipids can reach the brain tissue. This has been proved by an experiment in which orally administered labeled-phospholipids were detected in the brain tissue (see Non-Patent Publication 2). (3) When absorbed, one of the fatty acid molecules of the phospholipids is hydrolyzed to generate lysophospholipids in the digestive system. The lysophospholipids are absorbed in the small intestine and reassembled into phospholipids in the small intestine cells before they are absorbed through the lymph vessels (Non-Patent Publication 3). In this manner, the LCPUFA-PL circulates through the body without entering the liver.

Conventionally, the LCPUFA-PL has been produced by being prepared or purified from organs, eggs, or other parts of animals containing a large amount of LCPUFC-PL. In one specific example, the LCPUFA-PL is prepared from the cow brain, or a phospholipid fraction from the pig liver or fish egg is purified (see Patent Publications 5 and 6). Further, particular species of marine bacteria are known to produce LCPUFA-PL (see Non-Patent Publication 4).

[Patent Publication 1]

Japanese Laid-Open Patent Publication No. 110888/1997 (published on April 28, 1997)

[Patent Publication 2]

Japanese Laid-Open Patent Publication No. 237480/1998 (Published on September 8, 1998)

[Patent Publication 3]

Japanese PCT Laid-Open Publication No. 508193/1998 (Published on August 18, 1998; International Publication No. WO96/10922, published on April 18, 1996)

[Patent Publication 4]

Japanese Laid-Open Patent Publication No. 48831/2003 (Published on February 21, 2003)

[Patent Publication 5]

Japanese Laid-Open Patent Publication No. 35587/1999 (Published on February 9, 1999)

[Patent Publication 6]

Japanese Laid-Open Patent Publication No. 59678/ 1996 (Published on March 5, 1996)

[Non-Patent Publication 1]

G. Toffano et al., Nature Vol.260 p331-333 (1976)

[Non-Patent Publication 2]

G. Toffano et al. Clinical Trial Journal Vol.24 p18-24 (1987)

[Non-Patent Publication 3]

Katsumi Imaizumi, Clinical Nutrition (Rinsho Eiyo), Vol. 67, p. 119 (1985)

[Non-Patent Publication 4]

Kazunaga Yazawa et al., Oil Science (Abura Kagaku), Vol. 44, pp. 787-793 (1995)

However, to this date, there has been no technique of increasing the LCPUFA-PL level in the body by taking into account the metabolism of the LCPUFA-PL in the organism after ingestion.

That is, none of the foregoing techniques for preparing various compositions or processed foods containing phospholipids is directed to increasing the LCPUFA-PL level in the body. Accordingly, the prescribed amount or proportion of each component such as the phospholipids as disclosed in these publications does not take into account the metabolism in the target organism.

When LCPUFA-PL is considered that is supplied externally, the sources are limited and only a small amount can be obtained because the LCPUFA-PL currently available all derive from animal organs, the egg yolk of animals, or marine bacteria, for example. The supply is therefore unstable, and the same quality cannot always be obtained. Further, with the epidemic of the mad-cow disease, it has become very difficult to use the cow brain or other animal organs. As for the egg yolk, it contains only a small amount of LCPUFA-PL and a large amount of cholesterol. This makes the egg yolk undesirable as a nutritional composition. Further, in the LCPUFA-PL derived from marine bacteria, the majority of its fatty acids are branched fatty acids which are distinct to bacteria and are rarely seen in humans or other animals. The LCPUFC-PL derived from marine bacteria is therefore not suitable as a nutritional composition for human consumption.

Further, in using the LCPUFA-PL derived from sources such as animal organs, the egg yolk of animals, and marine bacteria, extracts are directly used. This is a drawback because the type or amount of fatty acids contained in the LCPUFA-PL, or the type or amount of phospholipids cannot be changed.

The present invention was made in view of the foregoing problems, and an object of the invention is to provide oil or fat compositions, suitable as nutraceutical food, that can efficiently increase the LCPUFA-PL level in the body by taking into account the metabolism in the body and without directly using LCPUFA-PL. The invention also provides food using such oil or fat compositions.

### DISCLOSURE OF INVENTION

The inventors of the present invention diligently worked to solve the foregoing problems. In accomplishing the present invention, the inventors have found that a considerable amount of LCPUFA-PL can be produced in the body when an oil or fat composition provided as a mixture of phospholipids (do not necessarily contain LCPUFA-PL) and a LCPUFA supply compound (does not necessarily contain phospholipids) is ingested. This was observed to be the result of highly efficient uptake of the LCPUFA supplied from the LCPUFA supply compound, which occurs when the non-LCPUFA-containing lysophospholipids produced by the hydrolysis of the phospholipids in the digestive system are reassembled in the small intestine cells. The inventors have also found that the LCPUFA-PL so produced was actually absorbed through the lymph vessels.

In order to solve the foregoing problems, an oil or fat composition according to the present invention contains a LCPUFA supply compound as a first component, and phospholipids as a second component, the LCPUFA supply compound containing long-chain polyunsaturated fatty acids (LCPUFA) in its structure and being hydrolyzable to remove its LCPUFA, wherein respective proportions of the first component and the second component are determined according to the number of hydrolyzable fatty acid bonds contained in the phospholipid molecules.

It is preferable in the oil or fat composition that a proportion of LCPUFA in all suppliable fatty acids from a total amount of the first component is not less than 25 percent by weight. It is also preferable that the respective proportions of the first component and the second component are determined in such a manner that a total weight ratio of suppliable LCPUFA to the second component phospholipids is not less than 0.5.

In the oil or fat composition, the phospholipids are preferably at least one kind of glycerophospholipids selected from the group consisting of phosphatidylcholine, phosphatidylserine, phosphatidylethanolamine, and phosphatidylinositol. In the case where at least phosphatidylserine is used as the phospholipids, a phosphatidylserine content may be preferably not less than 5 percent by weight with respect to a total amount of the second component.

In the phospholipids, fatty acids forming fatty acid bonds in the phospholipids may not be LCPUFA. In this case, the fatty acids forming fatty acid bonds in the phospholipids are preferably not arachidonic acid or docosahexaenoic acid.

Further, the phospholipids may be derived from non-animals. Specifically, the non-animals may be plants. In this case, soy bean lecithin and/or soy bean phosphatidylserine may be preferably used as the plant-derived phospholipids.

Alternatively, the phospholipids may be derived from animals. In this case, the animal-derived phospholipids are preferably derived from animal sources other than egg yolk. As the animal-derived phospholipids, phospholipids derived from organs of vertebrates, or fish egg may be preferable used.

It is preferable in the oil or fat composition that the LCPUFA supply compound is at least one kind selected from the group consisting of free fatty acid, fatty acid alcohol ester, glycerolipid, sphingolipid, sugar or sugar derivative ester, and carotenoid ester. Specifically, it is preferable that the LCPUFA supply compound supply at least one kind of LCPUFA selected from the group consisting of: eicosadienoic acid, eicosatrienoic acid, eicosatetraenoic acid, eicosapentaenoic acid, docosadienoic acid, docosatrienoic acid, docosatetraenoic acid, docosapentaenoic acid, docosahexaenoic acid, tetracosadienoic acid, tetracosatrienoic acid, tetracosatetraenoic acid, tetracosapentaenoic acid, and tetracosahexaenoic acid.

Further, at least one of carbon-carbon double bonds contained in a LCPUFA molecule may be conjugated. It is preferable that the LCPUFA supplied by the LCPUFA supply compound contains arachidonic acid and/or docosahexaenoic acid.

It is preferable in the oil or fat composition that a proportion of arachidonic acid in all suppliable fatty acids from a total amount of the first component is not less than 1 percent by weight. Alternatively, a proportion of docosahexaenoic acid in all suppliable fatty acids from a total amount of the first component is preferably not less than 11 percent by weight. More preferably, weight proportions of arachidonic acid and docosahexaenoic acid in all suppliable fatty acids from a total amount of the first component are substantially equal to each other.

The oil or fat composition according to the present invention may be used as a nutriment. In the present invention, the form of the oil or fat composition is not particularly limited. The oil or fat composition may be an oil-in-water dispersion liquid containing at least the first component in the form of a liposome formed by the second component phospholipids. Alternatively, the oil or fat composition may be processed into a capsule or tablet.

Food according to the present invention contains the oil or fat composition. For example, the food may be suitably used as a nutraceutical food product.

As described, with the intake of the oil or fat composition containing at least the first component and the second component, the phospholipids and the LCPUFA supply compound are metabolized and LCPUFA-PL is produced and absorbed in the body. The first and second components used in the oil or fat composition of the present invention are available in good supply and good quality at relatively low price. This increases the LCPUFA-PL level in the body without the conventional need to directly take LCPUFA-PL, which cannot be obtained in uniform quality and large quantity. Further, because the first and second components can be suitably obtained from plant or microorganism sources, the products are advantageous in terms of customer acceptance.

Unlike conventional techniques where specific phospholipid fractions purified from source organisms have been used as a sole source of LCPUFA-PL, the present invention provides a wide variety of LCPUFA-PL by combining the phospholipids and LCPUFA supply compound in different ways. By thus combining the first and second components according to the type of target organism or required properties for the end product, the value of the product can be increased with increased freedom of design.

The present invention therefore greatly and efficiently enhances the effectiveness of LCPUFA-PL, which is known to be effective in improving brain functions, without the need to directly take LCPUFA-PL.

### BEST MODE FOR CARRYING OUT THE INVENTION

The following will describe one embodiment of the present invention in detail. It should be noted that the invention is not limited in any way by the following descriptions.

The embodiment below describes oil or fat compositions, a producing process thereof, and use thereof in this order.

### (1) Oil or fat compositions according to the present invention

Oil or fat compositions according to the present invention include a long-chain polyunsaturated fatty acid (LCPUFA) supply compound as a first component, and phospholipids as a second component, wherein the proportions of these components are determined according to the number of hydrolyzable fatty acid bonds. With the intake of the oil or fat compositions, the digestive system metabolizes the compounds to generate a sufficient amount of LCPUFA-PL whose constituents are LCPUFA. The LCPUFA-PL is then absorbed through the lymph vessels.

### (1-1) First component: LCPUFA supply compound

The LCPUFA supply compound used in the present invention is not particularly limited as long as it can be ingested with phospholipids and metabolized in the digestive system to generate LCPUFA-PL. The constituents of the LCPUFA-PL are LCPUFA and a phospholipids backbone structure (glycerol phosphate compound, ceramide compound, and the like). However, the LCPUFA supply compound may be any compound as long as it can supply LCPUFA.

### <LCPUFA supply compound>

More specifically, the LCPUFA supply compound is a compound that contains LCPUFA in its structure, and in which the LCPUFA can be separated by hydrolysis. In other words, the LCPUFA supply compound may be any compound that generates LCPUFA by being hydrolyzed by the hydrolase in the body. Note that, the LCPUFA supply compound may contain fatty acids other than LCPUFA.

Preferable examples of the LCPUFA supply compound include but are not particularly limited to: LCPUFA itself (i.e., free fatty acids); fatty acid alcohol esters such as alkylalcohol ester, aminoalcohol ester, and sterol ester; glycerolipids such as triglycerides, diglycerides, monoglycerides, glycerophospholipids, and glycoglycerolipids; sphingolipids such as sphingophospholipids and glycosphingolipids; sugars or sugar derivative esters such as sucrose fatty acid esters, sorbitan fatty acid esters, and ascorbic acid fatty acid esters; and carotenoid esters. These compounds may be used either individually or in combinations of two or more kinds.

In the present invention, the LCPUFA-PL is generated by the metabolism in the body, and therefore the only requirement for the LCPUFA supply compound is to supply LCPUFA. Nevertheless, the LCPUFA supply compound may be a phospholipid compound, i.e., a compound containing LCPUFA-PL itself. That is, the first component used in the present invention may be a non-phospholipid LCPUFA supply compound used either alone or, as required, together with the LCPUFA-PL. Alternatively, a specific kind of LCPUFA-PL may be used by itself.

### <LCPUFA>

The LCPUFA is not particularly limited as long as it is an unsaturated fatty acid having 20 or greater carbon atoms with the double bonds. Specific examples of such LCPUFA include: eicosadienoic acid; eicosatrienoic acids such as dihomo-γ-linolenic acid and mead acid; eicosatetraenoic acids such as arachidonic acid (AA); eicosapentaenoic acid; docosadienoic acid; docosatrienoic acid; docosatetraenoic acid; docosapentaenoic acid; docosahexaenoic acid (DHA); tetracosadienoic acid; tetracosatrienoic acid; tetracosatetraenoic acid; tetracosapentaenoic acid; tetracosahexaenoic acid. Among these examples, arachidonic acid (AA) and/or docosahexaenoic acid (DHA) are particularly preferable.

When used as a LCPUFA supply compound (free fatty acid), these fatty acids may be used either individually or in combinations of two or more kinds. When contained as constituents of the LCPUFA supply compound, these fatty acids may be contained in one kind or two or more kinds.

In the LCPUFA, at least one of the C-C double bonds (-C=C-) in its structure may be conjugated. The conjugate double bonds may include a carbonyl group (C=O), or may be formed by adjacent C-C double bonds.

### <Preparation and production of LCPUFA supply compound>

The LCPUFA is abundant in fish oils and animal fats, and it is also found in algae. Thus, extracts from animals and plants containing a large amount of LCPUFA can be directly used as the free fatty acid LCPUFA. Examples of such extracts include: fish oils such as sardine oil, salmon oil, and purified fish oil; animal fats such as lard, beef tallow, and milk fat; and algae extracts such as a seaweed extract or tangle weed extract. These extracts can be produced by conventional extraction and preparation methods. The extracts may be unpurified if they are usable as the LCPUFA supply compound. If not, the extracts may be purified to a usable level. Evidently, there is no harm in purifying the extracts even when they are usable as the LCPUFA supply compound.

Microorganisms, which are also known to produce LCPUFA supply compounds, are also usable. For example, *Mortierella* fungi are known to produce a large amount of LCPUFA supply compound containing arachidonic acid (AA), dihomo-γ-linolenic acid, mead acid, eicosapentaenoic acid, eicosadienoic acid, and the like. Further, microorganisms that belong to genus *Ulkenia* or *Schizochytrium* are known to produce a large amount of docosapentaenoic acid or docosahexaenoic acid (DHA). These compounds may be suitably purified as required to make them usable as the LCPUFA supply compound.

Further, the LCPUFA supply compound so prepared or produced may be subjected to an enzyme or chemical treatment, so as to modify its molecular structure. Alternatively, the LCPUFA supply compound may be subjected to an alkali treatment to conjugate the double bonds. For example, the free fatty acid LCPUFA may be allowed to react with a suitable compound to synthesize a LCPUFA supply compound.

### <Suppliable amount of LCPUFA>

As described above, the first component may be a purified LCPUFA supply compound, or a mixture containing a LCPUFA supply compound, such as the extract or the composition containing other components. As such, the first component may contain compounds other than the LCPUFA supply compound. One example of such a compound is a fatty acid-containing compound other than the LCPUFA supply compound. Further, from the LCPUFA supply compound, fatty acids other than the LCPUFA may be separated.

When the first compound contains other compounds, or when it can separate fatty acids other than LCPUFA, the proportion of LCPUFA in all suppliable fatty acids from the total amount of the first component should be not less than 25 percent by weight, preferably not less than 33 percent by weight, or more preferably not less than 50 percent by weight.

As noted above, the LCPUFA in the present invention is preferably arachidonic acid (AA) and/or docosahexaenoic acid (DHA). In this case, the proportion of arachidonic acid (AA) in all suppliable fatty acids from the total amount of the first component should be not less than 1 percent by weight, preferably not less than 20.5 percent by weight, more preferably not less than 23 percent by weight, and even more preferably not less than 40 percent by weight. Further, the proportion of docosahexaenoic acid (DHA) in all suppliable fatty acids from the total amount of the first component should be not less than 11 percent by weight, preferably not less than 22.5 percent by weight, more preferably not less than 40 percent by weight, and even more preferably not less than 45 percent by weight.

Among all suppliable fatty acids from the total amount of the first component, it is preferable that arachidonic acid (AA) and docosahexaenoic acid (DHA) have substantially the same weight proportion. In other words, arachidonic acid (AA) and docosahexaenoic acid (DHA) should be contained in substantially equal amount with respect to all suppliable fatty acids.

By thus specifying the amount of suppliable fatty acids, the LCPUFA can be absorbed efficiently as the LCPUFA-PL. Note that, a proportion of the LCPUFA supply compound in the oil or fat composition is determined according to the number of hydrolyzable fatty acid bonds contained in the phospholipids, as will be described later in Producing Examples. In other words, the amount of suppliable fatty acids is determined based on the number of hydrolyzable fatty acid bonds contained in the phospholipids.

### (1-2) Second component: phospholipids

The phospholipids as the second component of the present invention are not particularly limited as long as they can be ingested with the LCPUFA supply compound and generate LCPUFA-PL by being metabolized in the digestive system. However, non-LCPUFA-PL whose constituents are not LCPUFA is particularly preferable. Specifically, non-LCPUFA-PL refers to those phospholipids in which the fatty acids forming the fatty acid bonds in the phospholipids are not LCPUFA.

As described above, in the present invention, the LCPUFA-PL is generated by the metabolism in the body. As such, the phospholipids contained in the oil or fat compositions according to the present invention need to supply a phospholipid backbone structure for the LCPUFA-PL. To this end, the non-LCPUFA-PL is particularly preferable as the second component. The LCPUFA-PL may be used instead of the non-LCPUFA-PL. However, the latter is more preferable because it allows the phospholipid backbone structure and the LCPUFA to be supplied from identifiable sources, which is preferable in obtaining desirable LCPUFA-PL structure in the body.

It is to be noted here that the phospholipids constitute a component for supplying a phospholipid backbone structure. Accordingly, the second component may be called "phospholipid backbone structure supply component" as opposed to the term "LCPUFA supply component" used for the first component.

### <Specific examples of phospholipids>

The phospholipids used in the present invention are not particularly limited. Phospholipids are found in organisms of many different species, and therefore may be obtained from any organism. Namely, the phospholipids may be derived from non-animal sources as well as animal sources. The non-animal source of the phospholipids is not particularly limited, but plants are commonly used. Non-limiting examples of source plants include soy bean, corn, and rice. Among these examples, soy bean-derived phospholipids are preferable. More specifically, soy bean lecithin and/or soy bean phosphatidylserine are suitable.

Other than plants, microorganisms may be used as the non-animal source of phospholipids. Non-limiting examples of the source microbe include filamentous fungi, yeasts, and bacteria.

The animal source of the phospholipids is not particularly limited either. Commonly, phospholipids derived from various edible animals or domestic animals are preferably used. Specific examples include: marine organisms such as fish or seashells; birds such as chicken; mammals such as cows and pigs; and other vertebrates. Eggs including fish egg or chicken egg may also be used since they are rich in phospholipids. Egg yolk lecithin is one common example of a commercially available source. Other than eggs, various vertebrate organs such as cow brain or pig liver may be used.

Note that, the present invention preferably uses plant-derived phospholipids. This is to provide identifiable sources for the phospholipid backbone structure and the LCPUFA and thereby improve the LCPUFA-PL structure generated in the body, as described above. Plant-derived phospholipids are preferable for this purpose because most of plant-derived phospholipids are non-LCPUFA.

Preferable examples of non-LCPUFA used in the present invention include phospholipids in which the fatty acids forming fatty acid bonds in the phospholipids are not arachidonic acid (AA) or docosahexaenoic acid (DHA).

Specific examples of such phospholipids include: glycerophospholipids such as phosphatidylcholine (PC), phosphatidylserine (PS), phosphatidylethanolamine (PE), phosphatidylinositol (PI), phosphatidylglycerol (PG), and cardiolipin (CL); sphingophospholipids such as sphingomyelin (SP); and lysophospholipids such as lysophosphatidylcholine (LPC), lysophosphatidylserine (LPS), lysophosphatidylethanolamine (LPE), lysophosphatidylinositol (LPI), and lysophosphatidylglycerol (LPG). Among these phospholipids, PC, PS, PE, and PI are preferable, and PS is particularly preferable.

These phospholipids may be used either individually or in combinations of two or more kinds. Further, as in the case of the LCPUFA supply compound, the phospholipids may be of a purified form, or may be contained in a mixture as in extracts or compositions containing other components. That is, the second component may contain compounds other than phospholipids. Further, when the phospholipids are PS, a proportion of PS with respect to the total amount of phospholipids contained as the second component is preferably not less than 5 percent by weight, or more preferably not less than 23 percent by weight. This enables the PS to exhibit its brain function improving effect.

### (2) Producing process of oil or fat compositions according to the present invention

Oil or fat compositions according to the present invention can be produced by mixing the first and second components, i.e., the LCPUFA supply compound and the phospholipids. However, in order to increase the LCPUFA-PL level in the body, the present invention determines the respective proportions of these two components according to the number of hydrolyzable fatty acid bonds contained in the phospholipid molecules, taking into account the metabolism in the body. This enables the LCPUFA-PL to be efficiently generated in the body.

### (2-1) LCPUFA-PL production in the body

As described in the BACKGROUND ART section, orally administered fatty acids such as the LCPUFA-PL are known to reach the brain tissue without entering the liver (Non-Patent Publication 2). In the case of glycerophospholipids, as indicated by Formula (1) below, one of the fatty acid molecules ("Fatty Acid" in Formula (1)) being absorbed is hydrolyzed to generate lysophospholipids in the digestive system. In Formula (1) below, the fatty acid at the second position is hydrolyzed to become a free fatty acid. Note that, in Formula (1) below, the symbol X varies depending on the type of phospholipids. For example, X may be a hydrogen atom (H2) or a base such as choline.

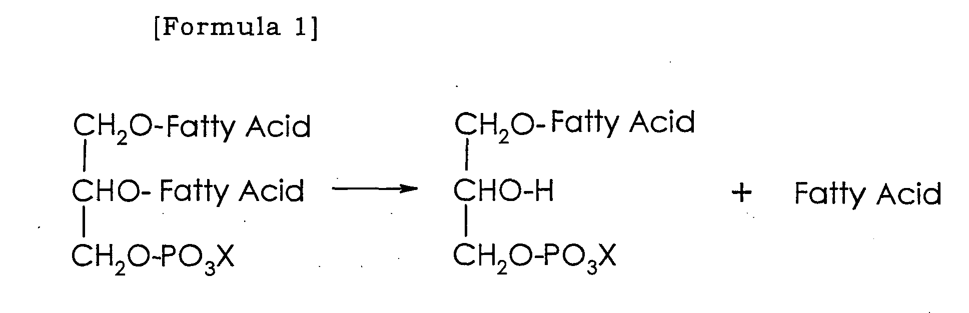

The resulting lysophospholipids and fatty acids are absorbed in the small intestine, and are resynthesized in the small intestine cells to phospholipids, as represented in Formula (2) below. The phospholipids are then absorbed through the lymph vessels (Non-Patent Publication (3)).

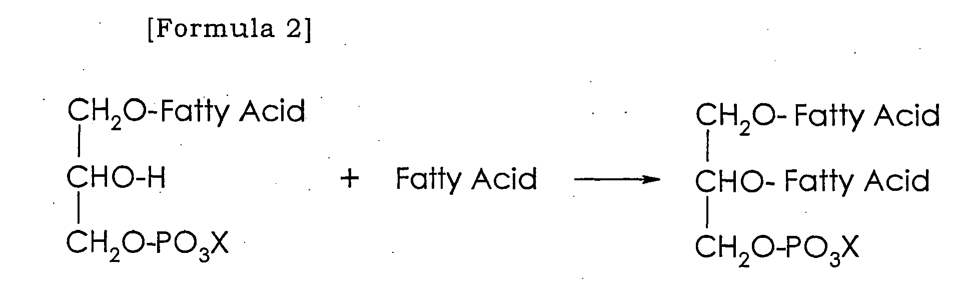

Based on these findings, the inventors of the present invention have found that (i) the amount of LCPUFA-PL in the body can be increased by independently supplying the phospholipid backbone structure such as that of glycerophospholipids, and the LCPUFA (fatty acids in Formulae (1) and (2) above), and resynthesizing the two in the small intestine, (ii) LCPUFA-PL can be efficiently produced in the body by specifying the respective proportions of the LCPUFA supply compound (first component) and the phospholipids (second component) contained in oil or fat compositions, and (iii) the resulting LCPUFA-PL is actually absorbed through the lymph vessels. The inventors have also found that (iv) the value of the product can be increased with increased freedom of design by appropriately combining different types of first components and second components according to the target organism or required properties for the end product. The inventors have thus accomplished the present invention.

As described, in the present invention, with the intake of the oil or fat compositions containing the phospholipids and the LCPUFA supply compound, the molecules are metabolized and LCPUFA-PL is generated and absorbed in the body. Generally, LCPUFA-PL is obtained only in a small amount, supply thereof is instable, and the same quality cannot be always obtained. The present invention, on the other hand, produces oil or fat compositions using phospholipids and a LCPUFA supply compound, which are available in good supply and good quality at relatively low price. It is therefore possible to sufficiently increase the LCPUFA-PL level in the body and absorb it, without the need to directly ingest the LCPUFA-PL.

The properties and actions of the phospholipids and LCPUFA widely vary depending on types of phospholipids and LCPUFA. Conventionally, fractions of purified phospholipids from sources such as the cow brain, pig liver, or fish egg have been directly used. The present invention, on the other hand, uses the phospholipids and LCPUFA in different combinations, and thereby provides different kinds of LCPUFA-PL. By thus using the phospholipids and LCPUFA in different combinations according to the target organism or required properties for the end product, the value of the product can be increased with increased freedom of design.

### (2-2) Proportions of phospholipids and LCPUFA supply compound

In the present invention, the respective proportions of the phospholipids and LCPUFA supply compound are determined according to the number of hydrolyzable fatty acid bonds contained in the phospholipid molecules. Specifically, the respective proportions of the phospholipids and LCPUFA supply compound are determined according to the structure of the phospholipids, which may be glycerophospholipids or sphingophospholipids according to the broad classification scheme of phospholipids.

In the case of the glycerophospholipids, as indicated by Formula (3) below, a molecule of glycerophospholipid contains two fatty acids forming fatty acid bonds ("CO-Fatty Acid" in Formula (3)). The proportions of the glycerophospholipids and LCPUFA supply compound are determined in such a manner that at least one of these two fatty acids is replaced with LCPUFA.

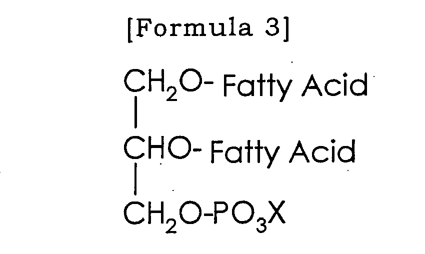

On the other hand, in the case of the sphingophospholipids, as indicated by Formula (4) below, a molecule of sphingophospholipid contains one fatty acid forming a fatty acid bond ("O-Fatty Acid" in Formula (4)). Accordingly, the proportions of the sphingophospholipids and LCPUFA supply compound are determined in such a manner that the fatty acid forming the fatty acid bond in the sphingophospholipids is replaced with LCPUFA.

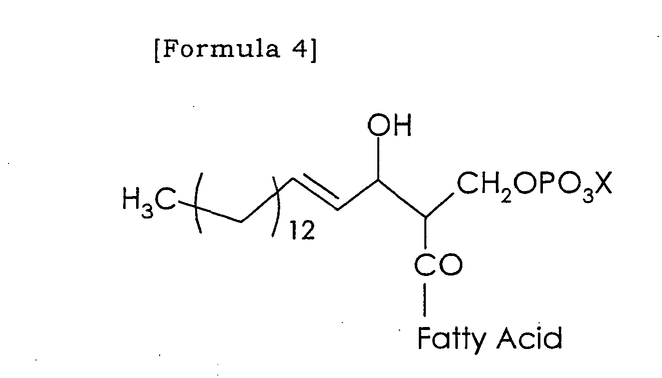

Note that, when the phospholipids are absorbed in the small intestine and resynthesized in the small intestine cells, not all but only some of the fatty acids forming the fatty acid bonds in the phospholipids are required to be replaced with LCPUFA. That is, the form or efficiency of resynthesis in the body will not be affected as long as the first and second components are suitably absorbed in the form of LCPUFA-PL.

When oil or fat compositions according to the present invention are orally ingested, the resynthesis does not always produce LCPUFA-PL according to the level calculated based on the numbers of moles or other factors, owning to the fact that the metabolism involves complex biochemical reactions and physiological activities in the body. As such, the present invention in actual practice determines the respective proportions of the first and second components according to the weight of suppliable LCPUFA in the first component, and the weight of the second component. This is done based on the results of Examples to be described later.

Specifically, the respective proportions of the first and second components are determined in such a manner that the weight ratio of all suppliable LCPUFA to all phospholipids (second component) is not less than 0.5. Preferably, the weight ratio is not less than 1, more preferably not less than 2, and even more preferably not less than 3. A weight ratio of less than 0.5 is not preferable because in this case the amount of suppliable LCPUFA becomes deficient with respect to the phospholipid backbone structure supplied by the phospholipids (second component). On the contrary, the amount of suppliable LCPUFA may be in excess of the supplied amount of phospholipid backbone structure, because the excess LCPUFA is absorbed after it is resynthesized to compounds other than phospholipids (for example, triglycerides). Accordingly, the upper limit of weight ratio is not particularly limited and is suitably set according to the intended use or applied field of the oil or fat compositions.

### (2-3) Production of oil or fat compositions

Oil or fat compositions according to the present invention are produced by mixing the phospholipids and LCPUFA supply compound using a conventional method, wherein the two components are mixed at specific proportions that are obtained based on calculated amounts of the phospholipids and LCPUFA. The mixing method and mixing conditions are not particularly limited.

Additionally, a substance (third component) that is miscible to the first and second components may be added. This enables the concentrations of the respective components to be adjusted, and stability of the oil or fat composition can be improved. Specifically, the third component may be diluent solvents or various kinds of additives. The type of diluent solvent is not particularly limited as long as it can dissolve the respective components. Examples of such diluent solvents include: an oil or fat containing triglycerides as the main constituents, such as soy bean oil, rape oil, and olive oil. Other examples include compounds that can be used as the LCPUFA supply compound, such as free fatty acids, fatty acid alcohol esters, glycerolipids, sphingolipids, sugars or sugar derivative esters, and carotenoid esters. These compounds may contain LCPUFA, though it is not preferable.

Non-limiting examples of additives include: vitamin E, tocotrienol, sesamin, sesaminol, sesamol, astaxanthin, astaxanthin esters, sterols, and carotenes. Oil or fat compositions according to the present invention are available as nutritional compositions for various food products. As such, any additive can be added if it is usable for food.

Oil or fat compositions according to the present invention include phospholipids. With the phospholipids (second component), the other components (first component and/or third component) may be solubilized in the form of a liposome. In this case, a dispersion liquid of an oil-in-water (O/W) type with a liposome can be used as oil or fat compositions according to the present invention (see Examples 8 below).

That is, oil or fat compositions according to the present invention can be produced by any of the techniques commonly used in the processing of fats and oils, such as dissolving in foods, or powderizing. The form of product oil or fat compositions is not particularly limited. For example, the oil or fat compositions may be in the form of a liquid, powder, or capsule (see Example 7 below). Further, the oil or fat compositions may be provided as pills or tablets.

### (3) Use of oil or fat compositions according to the present invention

Use of oil or fat compositions according to the present invention is not particularly limited. As a representative example, the oil or fat compositions can be suitably used as nutritional compositions for supplementing LCPUFA-PL. Such nutritional compositions can be used for any organisms, including humans as a representative example, as well as domestic animals and laboratory animals. Further, while the manner in which the nutritional compositions are ingested is not particularly limited, oral ingestion is most preferable. As such, the present invention also provides food containing the oil or fat compositions.

Food according to the present invention is not particularly limited as long as it contains the oil or fat compositions. Non-limiting examples include: bread, sweets of various kinds (including cold or frozen sweets), prepared food, dairy products, cereals, tofu, fried tofu, noodles, box lunch, seasonings, agricultural products such as wheat flour or meat, preserved food (canned food, frozen food, retort-packed food, etc.), soft drinks, milk beverage, soy milk, soups such as potage soup, and all other common foods. The method by which the oil or fat compositions are added to these common foods is not particularly limited, and any conventional method can be suitably used depending on the type of food used.

Further, food according to the present invention includes functional foods used for specific purposes, such as health foods or nutriments. Specific examples include nutraceutical foods including various supplements, and specified health foods. In the case of supplements, the oil or fat composition can be used only by processing it into appropriate form. Optionally, the third component may be added, as described in section (2-3) above.

Conventionally, animal organs such as the cow brain have been the major source of LCPUFA-PL. However, with the epidemic of the mad cow disease, these conventional sources have been avoided. The present invention, on the other hand, relies on plants and fermented microorganisms as the sources of the first and second components, which are the main components of LCPUFA-PL. This is advantageous in terms of customer acceptance, making the present invention particularly suitable when it is used in common foods or functional foods.

The applicable field of the invention is not just limited to food, but the invention is also applicable in the field of medicine. That is, oil or fat compositions according to the present invention may also be used as medicines. In this case, the invention is not just limited to a particular application, and any conventional technique may be used depending on the intended use.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

The following will describe the present invention in more detail based on Examples. It is to be noted that the invention is not limited in any way by the following

### Examples.

### [Producing Example 1]

As the LCPUFA supply compound (first component), arachidonic acid (AA)-containing triglycerides (LCPUFA content of 50 percent by weight), and triglycerides with a low arachidonic acid content (LCPUFA content of 25 percent by weight) was used. As the second component, soy bean lecithin (Sigma product) was used.

These components were mixed at varying proportions as indicated in Table 1 below (all readings are in mg), so as to obtain oil or fat compositions A1 through F1, and a control composition 1.

**[Table 1]**

| Oil or fat composition | Control 1 | A1 | B1 | C1 | D1 | E1 | F1 |
|---|---|---|---|---|---|---|---|
| Soy bean lecithin | 50 | 50 | 50 | 50 | 50 | 50 | 50 |
| Arachidonic acid-containing triglycerides | -- | 25 | 50 | 100 | 200 | 300 | -- |
| Triglycerides with a low arachidonic acid content | -- | -- | -- | -- | -- | -- | 200 |
| LCPUFA amount | -- | 12.5 | 25 | 50 | 100 | 150 | 50 |

| | | | | | | | |
|---|---|---|---|---|---|---|---|
| * All readings are in mg | | | | | | | |

Note that, the arachidonic acid (AA)-containing triglycerides were obtained as a fermented oil produced by arachidonic acid-producing filamentous *Mortierella alpina,* and it contained 40 percent by weight of arachidonic acid (AA), 5 percent by weight of dihomo-γ-linolenic acid (DGLA), and 5 percent by weight of other LCPUFA (eicosadienoic acid, eicosatrienoic acid, etc) as the constituents of the total fatty acids. The triglycerides with a low arachidonic acid content was also obtained as a fermented oil produced by arachidonic acid-producing filamentous *Mortierella alpina,* and it contained 23 percent by weight of arachidonic acid (AA), and 2 percent by weight of dihomo-γ-linolenic acid (DGLA) as the constituents of the total fatty acids. The soy bean lecithin contained constituent phospholipids but did not contain LCPUFA.

Further, in order to increase the absorbing efficiency of the oil or fat compositions administered to rats in the Examples below, 200 mg of taurocholic acid and 50 mg of bovine serum albumin were added to the oil or fat compositions.

### [Producing Example 2]

Oil or fat compositions A2 through C2, and a control composition 2 were produced by mixing the first and second components at the proportions indicated in Table 2 below (all readings are in mg). The procedure of Producing Example 1 was used except that three kinds of LCPUFA supply compounds, the arachidonic acid-containing triglyceride of Producing Example 1, dihomo-γ-linolenic acid (DGLA)-containing triglycerides, and sardine oil (NISSUI) were used as the first component.

**[Table 2]**

| Oil or fat composition | Control 2 | A2 | B2 | C2 |
|---|---|---|---|---|
| Soy bean lecithin | 50 | 50 | 50 | 50 |
| Arachidonic acid-containing triglycerides | -- | 200 | -- | -- |
| Dihomo-γ-linolenic acid-containing triglycerides | -- | -- | 200 | -- |
| Sardine oil | -- | -- | -- | 200 |
| LCPUFA amount | -- | 100 | 100 | 66 |

| | | | | |
|---|---|---|---|---|
| * All readings are in mg | | | | |

Note that, the dihomo-γ-linolenic acid (DGLA) -containing triglycerides were obtained as a fermented oil produced by *Mortierella alpina,* and it contained 50 percent by weight of dihomo-γ-linolenic acid (DGLA) as the constituent of the total fatty acids. The sardine oil contained 1 percent by weight of arachidonic acid, 21 percent by weight of eicosapentaenoic acid (EPA), and 11 percent by weight of docosahexaenoic acid (DHA) as the constituents of the total fatty acids.

### [Producing Example 3]

Oil or fat compositions A3 through D3, and a control composition 3 were produced by mixing the first and second components at the proportions indicated in Table 3 below (all readings are in mg). The procedure of Producing Example 1 was used except that three kinds of LCPUFA supply compounds, the arachidonic acid-containing triglyceride of Producing Example 1, the dihomo-γ-linolenic acid-containing triglycerides of Producing Example 2, and purified fish oil (NISSUI) were used as the first component, and that soy bean phosphatidylserine (BIZEN CHEMICAL) was used as the second component.

**[Table 3]**

| Oil or fat composition | Control 3 | A3 | B3 | C3 | D3 |
|---|---|---|---|---|---|
| Soy bean phosphatidylserine | 80 | 80 | 80 | 80 | 80 |
| Arachidonic acid-containing triglycerides | -- | 240 | -- | -- | 100 |
| Dihomo-γ-linolenic acid-containing triglycerides | -- | -- | 240 | -- | -- |
| Purified fish oil | -- | -- | -- | 240 | 100 |
| LCPUFA amount | -- | 120 | 120 | 120 | 120 |

| | | | | | |
|---|---|---|---|---|---|
| *All readings are in mg | | | | | |

Note that, the purified fish oil contained 1 percent by weight of arachidonic acid (AA), 4 percent by weight of eicosapentaenoic acid (EPA), and 45 percent by weight of docosahexaenoic acid (DHA) as the constituents of the total fatty acids. Further, an oil mixture containing the arachidonic acid (AA)-containing triglycerides and the purified fish oil in equal amount contained 20.5 percent by weight of arachidonic acid (AA), 2.5 percent by weight of dihomo-γ-linolenic acid (DGLA), 2 percent by weight of eicosapentaenoic acid (EPA), 22.5 percent by weight of docosahexaenoic acid (DHA), and 2.5 percent by weight of other LCPUFA (eicosadienoic acid, eicosatrienoic acid, etc.) as the constituents of the total fatty acids. As to the soy bean phosphatidylserine, 23 percent by weight of its constituent phospholipids was phosphatidylserine (PS), and the LCPUFA was not contained.

### [Producing Example 4]

Oil or fat compositions A4 through E4, and a control composition 4 were produced by mixing the first and second components at the proportions indicated in Table 4 below (all readings are in mg). The procedure of Producing Example 1 was used except that the arachidonic acid-containing triglycerides of Producing Example 1 was used as the first component, the soy bean lecithin of Producing Example 1 as the second component, and a soy bean oil as a diluent solvent.

**[Table 4]**

| Oil or fat composition | Control 4 | A4 | B4 | C4 | D4 | E4 |
|---|---|---|---|---|---|---|
| Soy bean lecithin | 50 | 50 | 50 | 50 | 50 | 50 |
| Soybean oil | -- | 225 | 200 | 150 | 50 | -- |
| Arachidonic acid-containing triglycerides | -- | 25 | 50 | 100 | 200 | 250 |
| Arachidonic acid (Arachidonic acid-contentin total fatty acids) | -- | 10 (4%) | 20 (8%) | 40 (16%) | 80 (32%) | 100 (40%) |
| LCPUFA amount | -- | 12.5 | 25 | 50 | 100 | 125 |

| | | | | | | |
|---|---|---|---|---|---|---|
| *All readings are in mg | | | | | | |

Note that, the soy bean oil almost entirely consisted of triglycerides, and did not contain LCPUFA.

### [Producing Example 5]

Oil or fat compositions A5 through E5, and a control composition 5 were produced by mixing the first and second components at the proportions indicated in Table 5 below (all readings are in mg except those bracketed). The procedure of Producing Example 1 was used except that the purified fish oil of Producing Example 3 was used as the LCPUFA supply compound (first component), the soy bean lecithin of Producing Example 1 as the second component, and the soy bean oil of Producing Example 4 as a diluent solvent.

**[Table 5]**

| Oil or fat composition | Control 5 | A5 | B5 | C5 | D5 | E5 |
|---|---|---|---|---|---|---|
| Soy bean lecithin | 50 | 50 | 50 | 50 | 50 | 50 |
| Soy bean oil | -- | 228 | 206 | 162 | 73 | -- |
| Purified fish oil | -- | 22 | 44 | 88 | 177 | 250 |
| DHA (DHA content in total fatty acids) | -- | 10 (4%) | 20 (8%) | 40 (16%) | 80 (32%) | 113 (45%) |
| LCPUFA amount | -- | 11 | 22 | 44 | 89 | 125 |

| | | | | | | |
|---|---|---|---|---|---|---|
| *All readings are in mg except those bracketed | | | | | | |

### [Producing Example 6]

Oil or fat compositions A6 through D6, and a control composition 6 were produced by mixing the first and second components at the proportions indicated in Table 6 below (all readings are in mg except those bracketed). The procedure of Producing Example 1 was used except that the arachidonic acid-containing triglycerides of Producing Example 1 and the purified fish oil of Producing Example 3 were used as the first component, and that the soy bean lecithin of Producing Example 1 and the soy bean phosphatidylserine of Producing Example 3 were used as the second component.

**[Table 6]**

| Oil or fat composition | Control 6 | A6 | B6 | C6 | D6 |
|---|---|---|---|---|---|
| Soy bean lecithin | 80 | 154 | 144 | 128 | 80 |
| Soy bean phosphatidylserine (phosphatidyl content in total fatty acids) | -- | 6 (1.8%) | 16 (5%) | 32 (10%) | 80 (23%) |
| Arachidonic-containing triglycerides | 100 | 100 | 100 | 100 | 100 |
| Purified fish oil | 100 | 100 | 100 | 100 | 100 |
| LCPUFA amount | 120 | 120 | 120 | 120 | 120 |

| | | | | | |
|---|---|---|---|---|---|
| *All readings are in mg except those bracketed | | | | | |

[Example 1: Administration of oil or fat compositions to rats, using soy bean lecithin and arachidonic acid-containing triglycerides respectively for the phospholipids and LCPUFA supply compound]

Using SD male rats, 8 - 9 weeks of age, cannulation was carried out on the thoracic-lymph duct and stomach of anesthetized rats. The lymph flow was stabilized overnight by injecting a saline solution (Otsuka Pharmaceutical Co., Ltd.) at 3 ml/hr. In the next morning, the lymph was collected for 2 hours. The oil or fat compositions A1 through F1, and control composition 1 of Producing Example 1 were then administered through a gastric tube, and the lymph was collected over time.

The lymph was analyzed according to an ordinary method, as described below. First, lipids were collected from the lymph using the Folch method. After fractionating the PL fractions by thin-layer chromatography, transmethylation was carried out with a solvent of hydrochloric acid in methanol. By gas chromatography, the fatty acids in PL were quantified. As the internal standard, pentadecanoic acid was used.

Table 7 represents LCPUFA-PL concentrations in the lymph collected from rats administered with the respective oil or fat compositions, 2 hours (average concentration after 1 to 2 hours) and 6 hours (average concentration after 5 to 6 hours) after the administration. Note that, all readings are in mg/mL.

**[Table 7]**

| Oil or fat composition | Control 1 | A1 | B1 | C1 | D1 | E1 | F1 |
|---|---|---|---|---|---|---|---|
| Total LCPUFA-PL 2 hours after administration | 0.04 | 0.04 | 0.10 | 0.16 | 0.27 | 0.34 | 0.19 |
| DGLA in PL | 0.00 | 0.00 | 0.00 | 0.01 | 0.01 | 0.01 | 0.01 |
| AA in PL | 0.04 | 0.04 | 0.10 | 0.14 | 0.25 | 0.32 | 0.17 |
| EPA in PL | 0.00 | 0.00 | 0.00 | 0.00 | 0.00 | 0.00 | 0.00 |
| DHA in PL | 0.00 | 0.00 | 0.00 | 0.01 | 0.01 | 0.01 | 0.01 |
| Total LCPUFA-PL 6 hours after administration | 0.04 | 0.04 | 0.07 | 0.08 | 0.24 | 0.31 | 0.09 |
| DGLA in PL | 0.00 | 0.00 | 0.00 | 0.00 | 0.01 | 0.01 | 0.00 |
| AA in PL | 0.04 | 0.04 | 0.07 | 0.08 | 0.22 | 0.29 | 0.09 |
| EPA in PL | 0.00 | 0.00 | 0.00 | 0.00 | 0.00 | 0.00 | 0.00 |
| DHA in PL | 0.00 | 0.00 | 0.00 | 0.00 | 0.01 | 0.01 | 0.00 |

| | | | | | | | |
|---|---|---|---|---|---|---|---|
| *All readings are in mg/mL | | | | | | | |

As can be seen from Table 7, the LCPUFA-PL concentration of the rats administered with the oil or fat composition A1 was substantially the same as that of the rats administered with the control composition 1, whereas the rats administered with the oil or fat compositions B1 through F1 had higher LCPUFA-PL concentrations than those administered with the control composition 1.

[Example 2: Administration of oil or fat compositions to rats, using soy bean lecithin as the phospholipids and various compounds as the LCPUFA supply composition]

According to the procedure of Example 1, the oil or fat compositions A2 through C2, and control composition 2 were administered through a gastric tube to SD male rats, 8 - 9 weeks of age. The lymph was collected and analysis was made according to the procedure of Example 1.

Table 8 represents LCPUFA-PL concentrations in the lymph collected from rats administered with the respective oil or fat compositions, 2 hours (average concentration after 1 to 2 hours) and 6 hours (average concentration after 5 to 6 hours) after the administration. Note that, all readings are in mg/ mL.

**[Table 8]**

| Oil or fat composition | Control 2 | A2 | B2 | C2 |
|---|---|---|---|---|
| Total LCPUFA-PL 2 hours after administration | 0.04 | 0.27 | 0.27 | 0.16 |
| DGLA in PL | 0.00 | 0.01 | 0.21 | 0.01 |
| AA in PL | 0.04 | 0.25 | 0.05 | 0.06 |
| EPA in PL | 0.00 | 0.00 | 0.00 | 0.06 |
| DHA in PL | 0.00 | 0.01 | 0.01 | 0.03 |
| Total LCPUFA-PL 6 hours after administration | 0.04 | 0.24 | 0.23 | 0.16 |
| DGLA in PL | 0.00 | 0.01 | 0.19 | 0.01 |
| AA in PL | 0.04 | 0.22 | 0.04 | 0.06 |
| EPA in PL | 0.00 | 0.00 | 0.00 | 0.06 |
| DHA in PL | 0.00 | 0.01 | 0.00 | 0.03 |

| | | | | |
|---|---|---|---|---|
| *All readings are in mg/mL | | | | |

As can be seen from Table 8, the rats administered with the oil or fat compositions A2 through C2 had higher LCPUFA-PL concentrations than those administered with the control composition 2. Further, the LCPUFA-PL concentration in the lymph increased according to the fatty acid compositions of the LCPUFA supply compounds used for the oil or fat compositions A2 through C2.

### [Example 3: Administration of oil or fat compositions to rats, using soy bean phosphatidylserine as the phospholipids and various compounds as the LCPUFA supply compound]

According to the procedure of Example 1, the oil or fat compositions A3 through D3, and control composition 3 were administered through a gastric tube to SD male rats, 8 - 9 weeks of age. The lymph was collected and analysis was made according to the procedure of Example 1.

Table 9 represents LCPUFA-PL concentrations in the lymph collected from rats administered with the respective oil or fat compositions, 2 hours (average concentration after 1 to 2 hours) and 6 hours (average concentration after 5 to 6 hours) after the administration. Note that, all readings are in µg/mL.

**[Table 9]**

| Oil or fat composition | Control 3 | A3 | B3 | C3 | D3 |
|---|---|---|---|---|---|
| LCPUFA in PS 2 hours after administration | 2 | 88 | 78 | 88 | 90 |
| DGLA in PS | 0 | 8 | 76 | 0 | 0 |
| AA in PS | 2 | 80 | 2 | 5 | 45 |
| EPA in PS | 0 | 0 | 0 | 8 | 6 |
| DHA in PS | 0 | 0 | 0 | 75 | 39 |
| LCPUFA in PS 6 hours after administration | 2 | 68 | 62 | 60 | 73 |
| DGLA in PS | 0 | 7 | 60 | 0 | 0 |
| AA in PS | 2 | 61 | 2 | 3 | 36 |
| EPA in PS | 0 | 0 | 0 | 6 | 3 |
| DHA in PS | 0 | 0 | 0 | 51 | 34 |

| | | | | | |
|---|---|---|---|---|---|
| *All readings are in µg/mL | | | | | |

As can be seen from Table 9, the rats administered with the oil or fat compositions A3 through D3 had higher (PS)-type LCPUFA-PL concentrations than those administered with the control composition 3. Further, the phosphatidylserine LCPUFA-PL concentration in the lymph increased according to the fatty acid compositions of the LCPUFA supply compounds used for the oil or fat compositions A3 through D3.

### [Example 4: Administration of oil or fat compositions to rats by varying the arachidonic acid content with a constant triglyceride level]

According to the procedure of Example 1, the oil or fat compositions A4 through E4, and control composition 4 were administered through a gastric tube to SD male rats, 8 - 9 weeks of age. The lymph was collected and analysis was made according to the procedure of Example 1.

Table 10 represents LCPUFA-PL concentrations in the lymph collected from rats administered with the respective oil or fat compositions, 2 hours (average concentration after 1 to 2 hours) and 6 hours (average concentration after 5 to 6 hours) after the administration. Note that, all readings are in mg/mL.

**[Table 10]**

| Oil or fat composition | Control 4 | A4 | B4 | C4 | D4 | E4 |
|---|---|---|---|---|---|---|
| Total LCPUFA-PL 2 hours after administration | 0.04 | 0.04 | 0.08 | 0.14 | 0.25 | 0.30 |
| DGLA in PL | 0.00 | 0.00 | 0.00 | 0.01 | 0.01 | 0.01 |
| AA in PL | 0.04 | 0.04 | 0.08 | 0.12 | 0.23 | 0.28 |
| EPA in PL | 0.00 | 0.00 | 0.00 | 0.00 | 0.00 | 0.00 |
| DHA in PL | 0.00 | 0.00 | 0.00 | 0.01 | 0.01 | 0.01 |
| Total LCPUFA-PL 6 hours after administration | 0.04 | 0.04 | 0.07 | 0.10 | 0.20 | 0.25 |
| DGLA in PL | 0.00 | 0.00 | 0.00 | 0.00 | 0.01 | 0.01 |
| AA in PL | 0.04 | 0.04 | 0.07 | 0.10 | 0.18 | 0.23 |
| EPA in PL | 0.00 | 0.00 | 0.00 | 0.00 | 0.00 | 0.00 |
| DHA in PL | 0.00 | 0.00 | 0.00 | 0.00 | 0.01 | 0.01 |

| | | | | | | |
|---|---|---|---|---|---|---|
| *All readings are in mg/mL | | | | | | |

As can be seen from Table 10, in the rats administered with the oil or fat composition A4, the concentration of AA in PL and the LCPUFA-PL concentration were substantially the same as those of the rats administered with the control composition 4, whereas the rats administered with the oil or fat compositions B4 through E4 had higher concentrations of AA in PL and higher LCPUFA-PL concentrations than those administered with the control composition 4.

### [Example 5: Administration of oil or fat compositions to rats by varying the DHA content with a constant triglyceride level]

According to the procedure of Example 1, the oil or fat compositions A5 through E5, and control composition 5 were administered through a gastric tube to SD male rats, 8 - 9 weeks of age. The lymph was collected and analysis was made according to the procedure of Example 1.

Table 11 represents LCPUFA-PL concentrations in the lymph collected from rats administered with the respective oil or fat compositions, 2 hours (average concentration after 1 to 2 hours) and 6 hours (average concentration after 5 to 6 hours) after the administration. Note that, all readings are in mg/mL.

**[Table 11]**

| Oil or fat composition | Control 5 | A5 | B5 | C5 | D5 | E5 |
|---|---|---|---|---|---|---|
| Total LCPUFA-PL 2 hours after on administration | 0.04 | 0.05 | 0.09 | 0.14 | 0.26 | 0.30 |
| DGLA in PL | 0.00 | 0.00 | 0.00 | 0.01 | 0.01 | 0.01 |
| AA in PL | 0.04 | 0.04 | 0.04 | 0.04 | 0.05 | 0.05 |
| EPA in PL | 0.00 | 0.00 | 0.00 | 0.00 | 0.01 | 0.01 |
| DHA in PL | 0.00 | 0.01 | 0.05 | 0.09 | 0.19 | 0.23 |
| Total LCPUFA-PL 6 hours after administration | 0.04 | 0.04 | 0.07 | 0.10 | 0.20 | 0.25 |
| DGLA in PL | 0.00 | 0.00 | 0.00 | 0.00 | 0.01 | 0.01 |
| AA in PL | 0.04 | 0.04 | 0.04 | 0.04 | 0.04 | 0.04 |
| EPA in PL | 0.00 | 0.00 | 0.00 | 0.00 | 0.00 | 0.00 |
| DHA in PL | 0.00 | 0.00 | 0.03 | 0.06 | 0.15 | 0.20 |

| | | | | | | |
|---|---|---|---|---|---|---|
| *All readings are in mg/ mL | | | | | | |

As can be seen from Table 11, in the rats administered with the oil or fat composition A5, the concentration of DHA in PL was substantially the same as that of the rats administered with the control composition 5, whereas the rats administered with the oil or fat compositions B5 through E5 had higher concentrations of DHA in PL and higher LCPUFA-PL concentrations than those administered with the control composition 5.

### [Example 6: Administration of oil or fat compositions to rats by varying the phosphatidylserine content]

According to the procedure of Example 1, the oil or fat compositions A6 through E6, and control composition 6 were administered through a gastric tube to SD male rats, 8 - 9 weeks of age. The lymph was collected and analysis was made according to the procedure of Example 1.

Table 12 represents LCPUFA-PL concentrations in the lymph collected from rats administered with the respective oil or fat compositions, 2 hours (average concentration after 1 to 2 hours) and 6 hours (average concentration after 5 to 6 hours) after the administration.
Note that, all readings are in µg/mL.

**[Table 12]**

| Oil or fat composition | Control 6 | A6 | B6 | C6 | D6 |
|---|---|---|---|---|---|
| LCPUFA in PS 2 hours after administration | 3 | 4 | 19 | 40 | 91 |
| DGLA in PS | 0 | 0 | 0 | 0 | 1 |
| AA in PS | 3 | 3 | 10 | 19 | 45 |
| EPA in PS | 0 | 0 | 1 | 2 | 5 |
| DHA in PS | 0 | 1 | 8 | 19 | 40 |
| LCPUFA in PS 6 hours after administration | 3 | 3 | 15 | 32 | 75 |
| DGLA in PS | 0 | 0 | 0 | 0 | 0 |
| AA in PS | 3 | 3 | 8 | 16 | 36 |
| EPA in PS | 0 | 0 | 0 | 1 | 3 |
| DHA in PS | 0 | 0 | 7 | 15 | 36 |

| | | | | | |
|---|---|---|---|---|---|
| *All readings are in µg/mL | | | | | |

As can be seen from Table 12, in the rats administered with the oil or fat composition A6, the phosphatidylserine (PS)-type LCPUFA-PL concentration was substantially the same as that of the rats administered with the control composition 6, whereas the rats administered with the oil or fat compositions B6 through D6 had higher phosphatidylserine LCPUFA-PL concentrations than those administered with the control composition 6.

### [Example 7: Encapsulation of oil or fat compositions]

Three kinds of LCPUFA supply compounds were used as the first component: The arachidonic acid (AA)-containing triglycerides used in Example 1, the dihomo-γ-linolenic acid-containing triglycerides used in Example 2, and the purified fish oil used in Example 3. As the second component, the soy bean phosphatidylserine used in Example 3, and the soy bean lecithin used in Example 1 or 2 were used.

As the third component, a soy bean oil (SHOWASANGYO Co., Ltd.), a vitamin E oil (Eisai Co., Ltd.), sesamin (SUNTORY), and astaxanthin oil (SUNTORY) were used. Note here that, the soy bean oil was used as a diluent solvent. The vitamin E oil was an additive used as a stabilizer. The sesamin and astaxanthin oil were additives used as nutrients.

These components were mixed at varying proportions as indicated in Table 13 below (all readings are in weight %), and were mixed together according to the procedures of Producing Examples 1 through 6, so as to produce capsule contents 1 through 5.

**[Table 13]**

| Components | | Content | | | | |
|---|---|---|---|---|---|---|
| Class | Name of compound or composition | 1 | 2 | 3 | 4 | 5 |
| First | Arachidonic acid-containing trigtyoeride | 80 | 50 | 60 | 50 | 50 |
| | Dihomo-γ-linolenic acid -containing triglyceride | -- | -- | 30 | -- | -- |
| | Purified fish oil | -- | 50 | -- | 50 | 50 |
| Second | Soy bean lecithin | 20 | -- | -- | 10 | 10 |
| | Soy bean phosphatidylserine | -- | 20 | 20 | 10 | 10 |
| Third | Vitamin E oil | 0.05 | 0.05 | 0.05 | 0.05 | 0.05 |
| | Soy bean oil | -- | -- | 10 | -- | -- |
| | astaxanthin oil | -- | -- | -- | 0.01 | -- |
| | Sesamin | -- | -- | -- | -- | 0.01 |

| | | | | | | |
|---|---|---|---|---|---|---|
| *All readings are in weight % | | | | | | |

A 100:35 mixture (weight ratio) of galatin (Nitta Gelatin Inc.) and food-additive glycerine (Kao Corporation) was prepared and water was added thereto. By dissolving the solution at 50°C to 60°, a gelatin coat with a viscosity of 2,000 cp was prepared. With the contents 1 through 5, capsules were formed and dried using an ordinary method, so as to prepare soft capsules, each containing 180 mg of the content. The soft capsules are suitable for oral ingestion.

### [Example 8: Preparation of drinks with the oil or fat compositions]

The arachidonic acid-containing triglycerides and purified fish oil used in Example 3, and the vitamin E oil and astaxanthin oil used in Example 4 were mixed together at a weight ratio of 50:50:0.05:0.01 according to the procedures of Producing Examples 1 through 3, so as to prepare an oil or fat composition G. A 1:5 mixture (weight ratio) of the oil or fat composition G and soy bean lecithin was stirred in water at 60°C for 5 to 30 minutes, using a mixing-and-dispersing device (the Mtechnique product, CLEARMIX). As a result, the oil or fat composition G was uniformly dispersed in water in the form of a liposome, and a dispersion liquid of oil or fat composition G was obtained.

The concentration of the oil or fat composition G in the dispersion liquid was controllable in a range of 0.1 to 20 percent by weight, and the liquid was substantially transparent or opaque white. The average particle size of the liposome was 50 nm to 100 nm. A dispersion liquid containing 10% oil or fat composition G was used as an oil or fat composition of the present invention, and was added to orange juice, carbonated water, coffee, milk, soy milk, and a potage soup, each in 1/100 (v/v), so as to prepare (produce) drinks as the food of the present invention. These drinks were suitable for oral ingestion.

### INDUSTRIAL APPLICABILITY

As described, the present invention effectively increases the LCPUFA-PL level in the body without the need to directly take LCPUFA-PL. Further, the components of the LCPUFA-PL can be suitably obtained from plant or microorganism sources. The product is therefore advantageous in terms of customer acceptance. Further, by combining these components, the value of the product can be increased with increased freedom of design. The present invention therefore greatly and efficiently enhances the effectiveness of the LCPUFA-PL.

With these and other advantages, the present invention is useful not only in industries dealing with functional food but also in industries dealing with food in general and even medicines.

## Claims

1. An oil or fat composition containing a LCPUFA supply compound as a first component, and phospholipids as a second component, the LCPUFA supply compound containing long-chain polyunsaturated fatty acids (LCPUFA) in its structure and being hydrolyzable to remove its LCPUFA,
wherein respective proportions of the first component and the second component are determined according to the number of hydrolyzable fatty acid bonds contained in the phospholipid molecules.

2. The oil or fat composition as set forth in claim 1, wherein a proportion of LCPUFA in all suppliable fatty acids from a total amount of the first component is not less than 25 percent by weight.

3. The oil or fat composition as set forth in claim 1 or 2, wherein the respective proportions of the first component and the second component are determined in such a manner that a total weight ratio of suppliable LCPUFA to the second component phospholipids is not less than 0.5.

4. The oil or fat composition as set forth in any one of claims 1 through 3, wherein the phospholipids are at least one kind of glycerophospholipids selected from the group consisting of phosphatidylcholine, phosphatidylserine, phosphatidylethanolamine, and phosphatidylinositol.

5. The oil or fat composition as set forth in any one of claims 1 through 4, wherein at least phosphatidylserine is used as the phospholipids, and a phosphatidylserine content is not less than 5 percent by weight with respect to a total amount of the second component.

6. The oil or fat composition as set forth in any one of claims 1 through 5, wherein fatty acids forming fatty acid bonds in the phospholipids are not LCPUFA.

7. The oil or fat composition as set forth in claim 6, wherein the fatty acids forming fatty acid bonds in the phospholipids are not arachidonic acid or docosahexaenoic acid.

8. The oil or fat composition as set forth in any one of claims 1 through 7, wherein the phospholipids are derived from non-animals.

9. The oil or fat composition as set forth in claim 8, wherein the non-animals are plants.

10. The oil or fat composition as set forth in claim 9, wherein the plant-derived phospholipids are soy bean lecithin and/or soy bean phosphatidylserine.

11. The oil or fat composition as set forth in any one of claims 1 through 7, wherein the phospholipids are derived from animals.

12. The oil or fat composition as set forth in claim 11, wherein the animal-derived phospholipids are derived from animal sources other than egg yolk.

13. The oil or fat composition as set forth in claim 11 or 12, wherein the animal-derived phospholipids are derived from organs of vertebrates, or fish egg.

14. The oil or fat composition as set forth in any one of claims 1 through 13, wherein the LCPUFA supply compound is at least one kind selected from the group consisting of free fatty acid, fatty acid alcohol ester, glycerolipid, sphingolipid, sugar or sugar derivative ester, and carotenoid ester.

15. The oil or fat composition as set forth in claim 14, wherein the LCPUFA supply compound supplies at least one kind of LCPUFA selected from the group consisting of: eicosadienoic acid, eicosatrienoic acid, eicosatetraenoic acid, eicosapentaenoic acid, docosadienoic acid, docosatrienoic acid, docosatetraenoic acid, docosapentaenoic acid, docosahexaenoic acid, tetracosadienoic acid, tetracosatrienoic acid, tetracosatetraenoic acid, tetracosapentaenoic acid, and tetracosahexaenoic acid.

16. The oil or fat composition as set forth in claim 15, wherein at least one of carbon-carbon double bonds contained in a LCPUFA molecule is conjugated.

17. The oil or fat composition as set forth in claim 15 or 16, wherein the LCPUFA supplied by the LCPUFA supply compound contains arachidonic acid and/or docosahexaenoic acid.

18. The oil or fat composition as set forth in any one of claims 14 through 17, wherein a proportion of arachidonic acid in all suppliable fatty acids from a total amount of the first component is not less than 1 percent by weight.

19. The oil or fat composition as set forth in any one of claims 14 through 17, wherein a proportion of docosahexaenoic acid in all suppliable fatty acids from a total amount of the first component is not less than 11 percent by weight.

20. The oil or fat composition as set forth in any one of claims 14 through 19, wherein weight proportions of arachidonic acid and docosahexaenoic acid in all suppliable fatty acids from a total amount of the first component are substantially equal to each other.

21. The oil or fat composition as set forth in any one of claims 1 through 20, which is used as a nutriment.

22. The oil or fat composition as set forth in any one of claims 1 through 21, which is an oil-in-water dispersion liquid containing at least the first component in the form of a liposome formed by the second component phospholipids.

23. The oil or fat composition as set forth in any one of claims 1 through 21, which is processed into a capsule or tablet.

24. Food including the oil or fat composition of any one of claims 1 through 23.

25. The food as set forth in claim 24, which is a nutraceutical food product.
